# EUROPEAN PATENT SPECIFICATION

(11) **EP 3 718 798 B1**
(45) Date of publication and mention of the grant of the patent: **11.05.2022**
(21) Application number: 19750700.7
(22) Date of filing: 25.01.2019
(51) Int. Cl.: B60H 1/00, B60H 1/32, F04D 29/42, F04D 29/62, F04D 29/08

(54) **AIR BLOWING DEVICE FOR VEHICLE AIR-CONDITIONING**
LUFTBLASVORRICHTUNG FÜR FAHRZEUGKLIMATISIERUNG
DISPOSITIF DE SOUFFLAGE D'AIR POUR CLIMATISATION DE VÉHICULE

(30) Priority: 07.02.2018 JP 2018019883
(43) Date of publication of application: 07.10.2020
(73) Proprietor: Japan Climate Systems Corporation, Higashihiroshima-shi, Hiroshima 739-0153 (JP)
(72) Inventor: HAKATA, Toshiki, Higashihiroshima-shi, Hiroshima 739-0153 (JP); TANAKA, Takeshi, Higashihiroshima-shi, Hiroshima 739-0153 (JP); SETOUCHI, Naoto, Higashihiroshima-shi, Hiroshima 739-0153 (JP)
(74) Representative: Germain Maureau
(86) International application number: PCT/JP2019/002486
(87) International publication number: WO 2019/155915

(56) References cited:
- WO-A1-2014/109286
- WO-A1-2016/066739
- JP-A- H1 076 834
- JP-A- 2004 330 968
- JP-A- 2005 088 672
- US-A1- 2017 313 161

## Description

### TECHNICAL FIELD

The present invention relates to vehicle air-conditioning air blowers each mounted on an automobile, for example, to blow air-conditioning air, and more particularly relates to a structure capable of blowing air inside a cabin and air outside the cabin at the same time.

### BACKGROUND ART

Typically, an air conditioner mounted on a vehicle selects either air inside a cabin (inside air) or air outside the cabin (outside air) to blow the selected air as air-conditioning air, and the blown air has its temperature controlled by a cooling heat exchanger and a heating heat exchanger, and is then fed to areas inside the cabin.

Recently commercialized vehicle air-conditioning air blowers for blowing air-conditioning air include a device that is switchable among an inside-air circulation mode in which only the inside air is blown, an outside-air introduction mode in which only the outside air is blown, and an inside-outside air double flow mode in which both inside air and outside air are blown. That is to say, as disclosed in JP 2000-296710, JP 2001-206044, JP 2011-201501 and JP 2015-67260, a casing of a vehicle air-conditioning air blower has an inside air inlet, an outside air inlet, an upper air passage, and a lower air passage. The upper and lower air passages each include therein a blower fan. These two blower fans are driven by a common motor. The casing is provided with an inside/outside air switching damper for opening and closing the inside air inlet and the outside air inlet. The inside/outside air switching damper allows switching to be made among the inside-air circulation mode in which only the inside air inlet is opened, the outside-air introduction mode in which only the outside air inlet is opened, and the inside-outside air double flow mode in which the inside air inlet and the outside air inlet are opened. If the two blower fans are rotated, and the inside-air circulation mode is selected, the inside air introduced through the inside air inlet flows through the upper and lower air passages. Alternatively, if the outside-air introduction mode is selected, the outside air introduced through the outside air inlet flows through the upper and lower air passages. Still alternatively, if the inside-outside air double flow mode is selected, the outside air introduced through the outside air inlet flows through the upper air passage, and the inside air introduced through the inside air inlet flows through the lower air passage.

A vehicle air-conditioning air blower of JP 2015-67260 includes a scroll casing housing a blower fan. The scroll casing includes an upper scroll casing and a lower scroll casing. An upper portion of the lower scroll casing is fitted into a lower portion of the lower scroll casing, thereby integrating the upper and lower scroll casings together.

The scroll casing includes therein a partition plate extending horizontally through a vertically intermediate portion of the scroll casing. The partition plate partitions the interior of the scroll casing into upper and lower air passages. A peripheral portion of the partition plate is vertically sandwiched between the lower portion of the upper scroll casing and the upper portion of the lower scroll casing.

PCT Application No. 2016/066739 discloses a fan including at least one turbine having blades with an air outlet height, said fan comprising an air-suction region located on the side of an end surface of the turbine and including a separation channel at least partially defined by a separating partition such as to separate the air from the suction region into a central flow circulating inside the separation channel, with an intake section, and an annular peripheral flow circulating at the periphery of the separation channel, with an intake section Sext, as well as to direct said flows into the fan towards the blades of the turbine.

US Application No. 2017/313161 discloses a heating, ventilation and/or air-conditioning device for a motor vehicle comprising at least one first air circulation channel, at least one second air circulation channel, and means for generating an air stream in the first air circulation channel and/or in the second air circulation cannel, the device also comprising means for the inflow of a cleaning product ending in the first air circulation channel and/or in the second air circulation channel.

PCT Application No. 2014/109286 discloses an indoor unit of an air-conditioner for a vehicle divided into a fan unit that sends air to a passenger compartment of the vehicle, and an air-conditioning unit that controls temperature of the air sent from the fan unit.

### TECHNICAL PROBLEM

Rainwater or car-washing water may enter the interior of the scroll casing through the outside air inlet, and may be accumulated on the partition plate. In Patent Document 4, the partition plate has a communication hole through which the upper and lower scroll casings communicate with each other. Water accumulated on the partition plate passes through the communication hole, and is then allowed to flow through the lower air passage. The water is drained out of the cabin through a drainage hole together with condensed water in an evaporator.

However, the water accumulated on the partition plate may flow toward the peripheral portion of the partition plate. Thus, the water on the peripheral portion of the partition plate may seep through portions of the upper and lower scroll casings fitted to each other to the outside of the scroll casing.

To address this problem, forming a vertical plate on an upper surface of the partition plate may make it difficult for water accumulated on the partition plate to flow toward the peripheral portion of the partition plate. However, if the static pressure of the scroll casing is high under conditions such as high airflow, water is scattered by the fan to flow beyond the vertical plate toward the peripheral portion of the partition plate. As a result, the water may seep through the gap between the portions of the upper and lower scroll casings fitted to each other to the outside of the scroll casing.

Even if water is scattered by the fan, increasing the height of the vertical plate from the upper surface of the partition plate makes it difficult for the water to flow toward the peripheral portion of the partition plate. However, increasing the height of the vertical plate reduces the internal volume of the scroll casing, and hinders ventilation, resulting in a reduction in ventilation capacity. Further, if an attempt is made to integrate a vertical plate having a high height with the partition plate, the vertical plate may easily deform due to contraction of the formed vertical plate and other factors so as to fall down. This may reduce the ease of assembling the partition plate to the scroll casing. Furthermore, if an attempt is made to integrate a vertical plate having a high height with the partition plate, the partition plate itself may be difficult to form. This may reduce the ease of manufacturability.

In view of the foregoing background, it is therefore an object of the present invention to, if a partition plate disposed inside a scroll casing allows an inside-outside air double flow mode to be selected, make it difficult for water accumulated on the partition plate to leak to the outside of the scroll casing, without reducing the ventilation capacity, the ease of assembling the partition plate to the scroll casing, and the ease of manufacturability.

### SOLUTION TO THE PROBLEM

In order to achieve the foregoing object, a first aspect of the invention, according to claim 1, is directed to a air-conditioning air blower configured to be mounted in a vehicle. The vehicle air-conditioning air blower includes: a casing having an inside air inlet through which air inside a cabin is introduced into the casing, and an outside air inlet through which air outside the cabin is introduced into the casing, the casing further having a first air passage and a second air passage each communicating with both of the inside air inlet and the outside air inlet, the casing housing an inside/outside air switching damper that opens and closes the inside air inlet and the outside air inlet; a first blower fan disposed in the first air passage; and a second blower fan disposed in the second air passage. The first blower fan sends air in the first air passage as air-conditioning air, and the second blower fan sends air in the second air passage as air-conditioning air. The inside air inlet and the outside air inlet are formed through an upper portion of the casing. A scroll casing that houses the first and second blower fans is provided below the inside air inlet and the outside air inlet of the casing. The scroll casing is divided into an upper scroll casing in which the first blower fan is housed and a lower scroll casing in which the second blower fan is housed. A lower portion of the upper scroll casing and an upper portion of the lower scroll casing are fitted to each other, thereby integrating the upper and lower scroll casings together. The scroll casing includes therein a partition plate partitioning an interior of the scroll casing into upper and lower spaces, the partition plate being separate from the scroll casing. The upper space above the partition plate forms the first air passage, and the lower space below the partition plate forms the second air passage. A peripheral portion of the partition plate has an inner fitting portion that protrudes upward. The inner fitting portion is fitted inside a portion of the lower portion of the upper scroll casing into which the lower scroll casing is fitted, the inner fitting portion being formed in a shape of a plate protruding upward, and the inner fitting portion facing an inner peripheral surface of the lower portion of the upper scroll casing, an upper end surface of the inner fitting portion having a partition plate-side inclined surface that is inclined downward toward either inside or outside of the scroll casing, the lower portion of the upper scroll casing having a scroll-side inclined surface extending along the partition plate-side inclined surface, and abutting against the partition plate-side inclined surface and a space is formed between the inner peripheral surface of the lower portion of the upper scroll casing and a side surface of the inner fitting portion facing the inner peripheral surface of the lower portion of the upper scroll casing.

With this configuration, when the inside air inlet is opened, and the outside air inlet is closed by an operation of the inside/outside air switching damper, the vehicle air-conditioning air blower operates in the inside-air circulation mode in which inside air is introduced through the inside air inlet thereinto. In the inside-air circulation mode, the first and second blower fans rotating allow the inside air introduced through the inside air inlet to flow through the first and second air passages and to be then sent as air-conditioning air. When the inside air inlet is closed, and the outside air inlet is opened by an operation of the inside/outside air switching damper, the vehicle air-conditioning air blower operates in the outside-air introduction mode in which outside air is introduced through the outside air inlet thereinto. In the outside-air introduction mode, the first and second blower fans rotating allow the outside air introduced through the outside air inlet to flow through the first and second air passages and to be then sent as air-conditioning air. Further, when the inside air inlet and the outside air inlet are opened by an operation of the inside/outside air switching damper, the vehicle air-conditioning air blower operates in the inside-outside air double flow mode. The first and second blower fans rotating allow the outside air introduced through the outside air inlet to flow through one of the first and second air passages, and allow the inside air introduced through the inside air inlet to flow through the other air passage. Thus, a combination of the outside air and the inside air is sent as air-conditioning air. That is to say, an optional one of the outside-air introduction mode, the inside-air circulation mode, and the inside-outside air double flow mode can be selected, and air can be sent in the selected mode.

For example, if rainwater or car-washing water enters the interior of the scroll casing through the outside air inlet, it may be accumulated on the partition plate. A current of air in the scroll casing or any other factor is supposed to cause the water accumulated on the partition plate to flow toward the peripheral portion of the partition plate. Meanwhile, the peripheral portion of the partition plate has the inner fitting portion which is to be fitted into the lower portion of the upper scroll casing and which protrudes upward. Thus, the water is blocked by the inner fitting portion. If the static pressure of the scroll casing is high under high airflow conditions, the water accumulated on the partition plate is scattered by rotation of the fan to attempt to flow beyond the inner fitting portion. However, the water hardly flows through the gap between the inner fitting portion, which is fitted into the lower portion of the upper scroll casing, and the lower portion of the upper scroll casing toward the outside of the scroll casing. This reduces water seeping to the outside of the scroll casing. Further, an area where the lower portion of the upper scroll casing and the upper portion of the lower scroll casing are fitted to each other is located outside the inner fitting portion. Thus, even if the water accumulated on the partition plate flows beyond the inner fitting portion, the area where the lower portion of the upper scroll casing and the upper portion of the lower scroll casing are fitted to each other reduces water seeping to the outside. Thus, a multiple watertight structure is achieved. This eliminates the need for integrating a vertical plate having a high height with the partition plate, thus preventing the ventilation capacity from decreasing and preventing the ease of assembling the partition plate to the scroll casing and the ease of manufacturability from also decreasing.

With this configuration, the partition plate-side inclined surface is inclined downward toward either the inside or outside of the scroll casing, and the scroll-side inclined surface is also inclined in a similar manner. Thus, when the inner fitting portion of the partition plate is to be fitted into the lower portion of the upper scroll casing, simply moving the inner fitting portion of the partition plate in the direction of fitting of the inner fitting portion allows the partition plate and the upper scroll casing to be aligned with each other in the inside-to-outside direction.

With this configuration, for example, if the water accumulated on the partition plate flows beyond the inner fitting portion, the water can flow into the space between the inner peripheral surface of the lower portion of the upper scroll casing and the inner fitting portion, and can be introduced through the space between the upper portion of the lower scroll casing and the lower surface of the partition plate into the lower scroll casing.

A second aspect of the invention is an embodiment of the first aspect of the invention. In the second aspect, a lower surface of the partition plate may have at least one protrusion abutting against the upper portion of the lower scroll casing.

With this configuration, the protrusion of the lower surface of the partition plate abutting against the upper portion of the lower scroll casing reduces vibrations of the partition plate.

A third aspect of the invention is an embodiment wherein the protrusion may include a plurality of protrusions spaced apart from one another in a circumferential direction of the lower scroll casing.

With this configuration, for example, if the water accumulated on the partition plate flows beyond the inner fitting portion, the space formed between the upper portion of the lower scroll casing and the lower surface of the partition plate allows the water to be introduced through the space between the upper portion of the lower scroll casing and the lower surface of the partition plate into the lower scroll casing.

A fourth aspect of the invention is an embodiment wherein the lower portion of the upper scroll casing may have a recess into which the inner fitting portion is fitted.

With this configuration, the inner fitting portion is fitted into the recess of the upper scroll casing, thereby making it more difficult for water to leak to the outside.

A fifth aspect of the invention is an embodiment wherein the upper portion of the lower scroll casing may have a lower fitting projection projecting upward, and the lower portion of the upper scroll casing may have an upper fitting groove into which the lower fitting projection is inserted, and fitted.

With this configuration, the lower fitting projection of the lower scroll casing is inserted, and fitted, into the upper fitting groove of the upper scroll casing. This can improve water sealing performance.

A sixth aspect of the invention is an embodiment wherein the upper portion of the lower scroll casing may have a step portion to which the peripheral portion of the partition plate is fitted.

With this configuration, the partition plate is positioned by the lower scroll casing while being assembled to the lower scroll casing. This reduces misalignment of the partition plate.

A seventh aspect of the invention is an embodiment wherein the partition plate-side inclined surface may be inclined downward toward the inside of the scroll casing.

### ADVANTAGES OF THE INVENTION

According to the first aspect of the invention, a lower portion of an upper scroll casing and an upper portion of a lower scroll casing are fitted to each other. A peripheral portion of a partition plate has an inner fitting portion protruding upward. The inner fitting portion is fitted inside a portion of the lower portion of the upper scroll casing into which the lower scroll casing is fitted. This allows an inside-outside air double flow mode to be selected, and can make it difficult for water accumulated on the partition plate to leak to the outside of the scroll casing, without reducing the ventilation capacity, the ease of assembling the partition plate to the scroll casing, and the ease of manufacturability.

An upper end surface of the inner fitting portion of the partition plate has a partition plate-side inclined surface that is inclined downward toward either the inside or outside of the scroll casing, and the lower portion of the upper scroll casing has a scroll-side inclined surface extending along the partition plate-side inclined surface and abutting against the partition plate-side inclined surface. This allows the partition plate and the upper scroll casing to be easily aligned with each other in the inside-to-outside direction. This can further improve the ease of assembling the partition plate.

If water accumulated on the partition plate flows beyond the inner fitting portion, a space formed between an inner peripheral surface of the lower portion of the upper scroll casing and the inner fitting portion allows the water to be introduced into the lower scroll casing. This can reduce water seeping to the outside.

According to the second aspect of the invention, a lower surface of the partition plate has at least one protrusion abutting against the upper portion of the lower scroll casing. This can reduce vibrations of the partition plate, and can eliminate or reduce noise.

According to the third aspect of the invention, if water accumulated on the partition plate flows beyond the inner fitting portion, the water can be introduced through a space between the upper portion of the lower scroll casing and the lower surface of the partition plate into the lower scroll casing. This can reduce water seeping to the outside.

According to the fourth aspect of the invention, the lower portion of the upper scroll casing has a recess into which the inner fitting portion is fitted. This makes it more difficult for water to leak to the outside.

According to the fifth aspect of the invention, a lower fitting projection of the lower scroll casing is inserted, and fitted, into an upper fitting groove of the upper scroll casing. This can make it more difficult for water to leak to the outside.

According to the sixth aspect of the invention, the partition plate and the lower scroll casing can be aligned with each other. This can further improve the ease of assembling the partition plate.

### BRIEF DESCRIPTION OF THE DRAWINGS

[FIG. 1] FIG 1 is a back view of a vehicle air-conditioning air blower according to an embodiment of the present invention.
[FIG. 2] FIG 2 is a left side view of the vehicle air-conditioning air blower.
[FIG. 3] FIG 3 is a bottom view of the vehicle air-conditioning air blower.
[FIG. 4] FIG. 4 is a cross-sectional view taken along line IV-IV shown in FIG. 1.
[FIG. 5] FIG. 5 is an enlarged view of a portion A of FIG. 4.

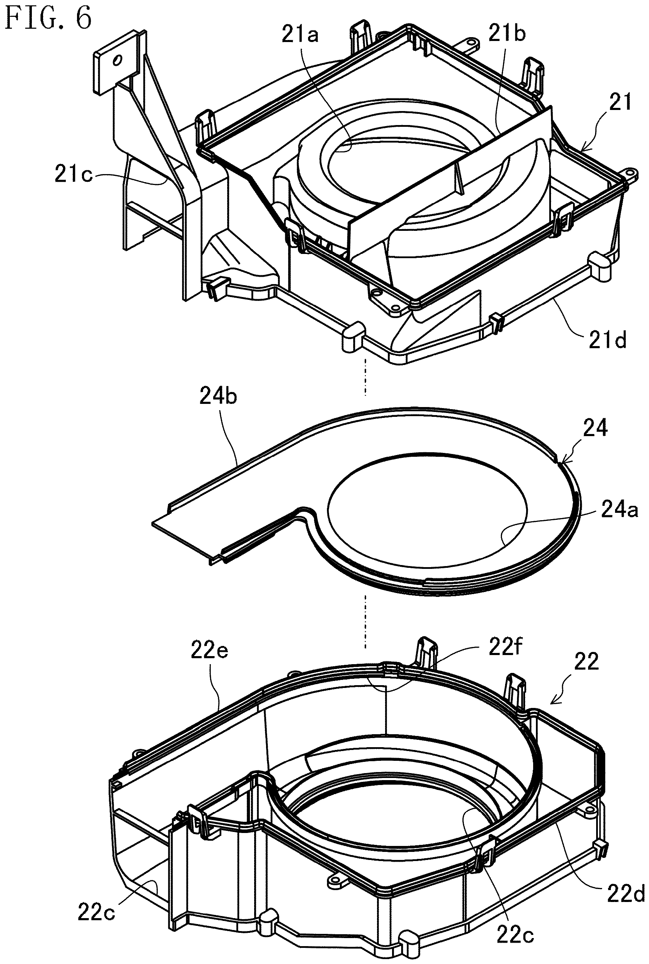

[FIG. 6] FIG. 6 is an exploded perspective view of a scroll casing.

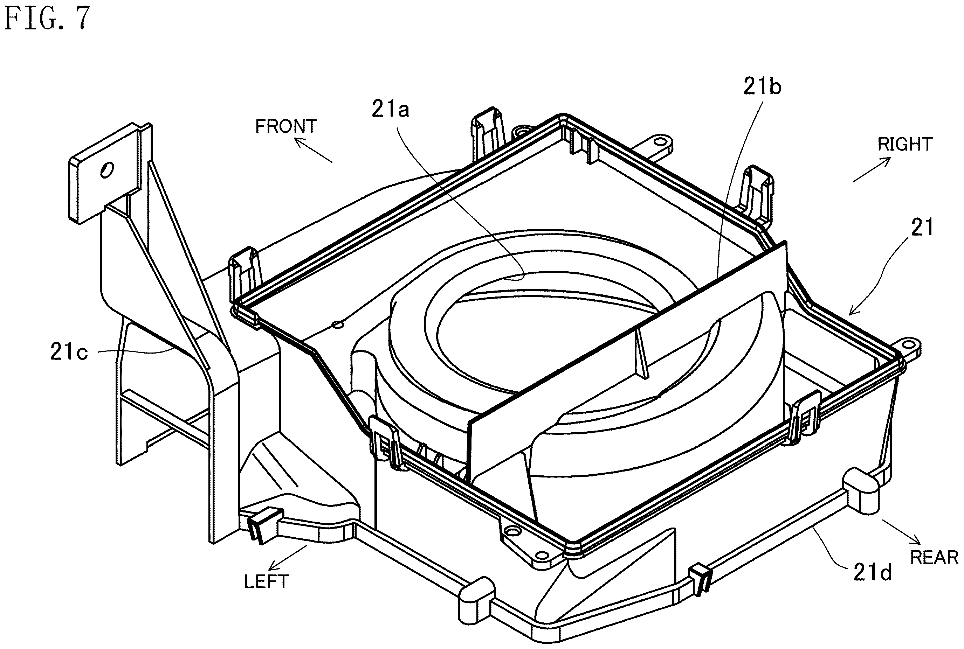

[FIG. 7] FIG. 7 is a perspective view of an upper scroll casing as viewed from above.

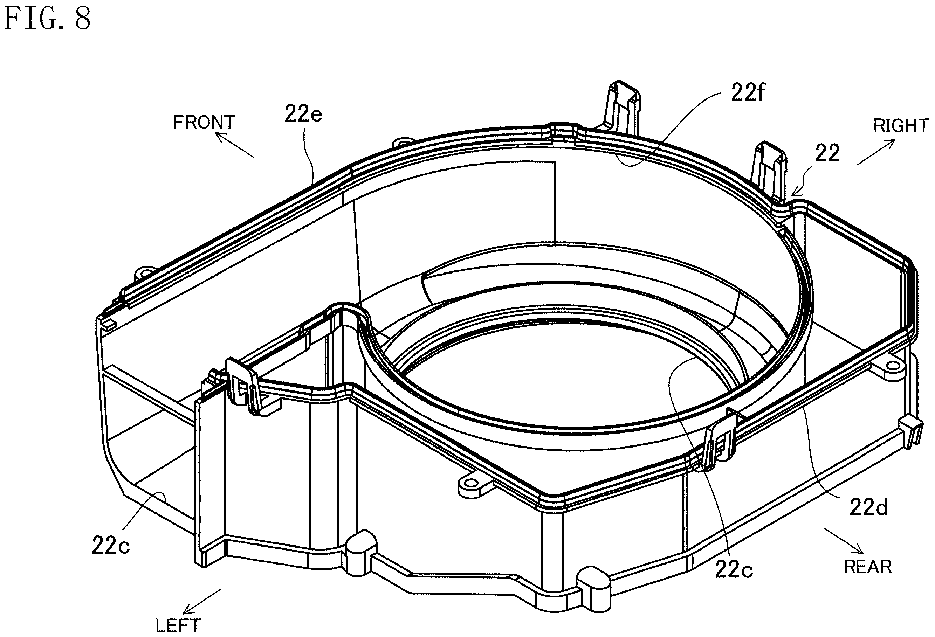

[FIG. 8] FIG. 8 is a perspective view of a lower scroll casing as viewed from above.
[FIG. 9] FIG. 9 is a perspective view of a partition plate as viewed from above.

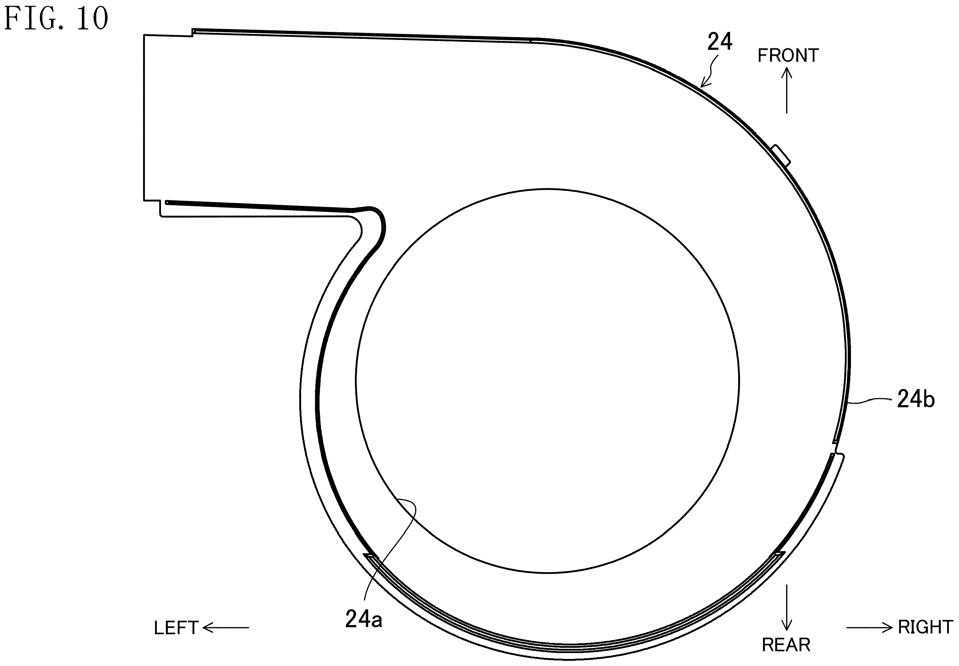

[FIG. 10] FIG. 10 is a plan view of the partition plate.

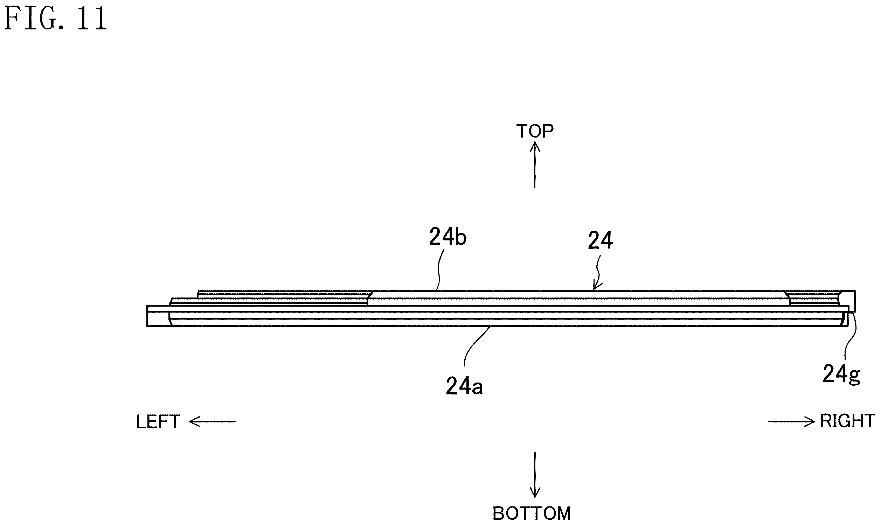

[FIG. 11] FIG. 11 is a back view of the partition plate.
[FIG. 12] FIG. 12 is a bottom view of the partition plate.
[FIG. 13] FIG. 13 is an enlarged view of a portion B of FIG. 12.

### DESCRIPTION OF EMBODIMENTS

Embodiments of the present invention will now be described in detail with reference to the drawings..

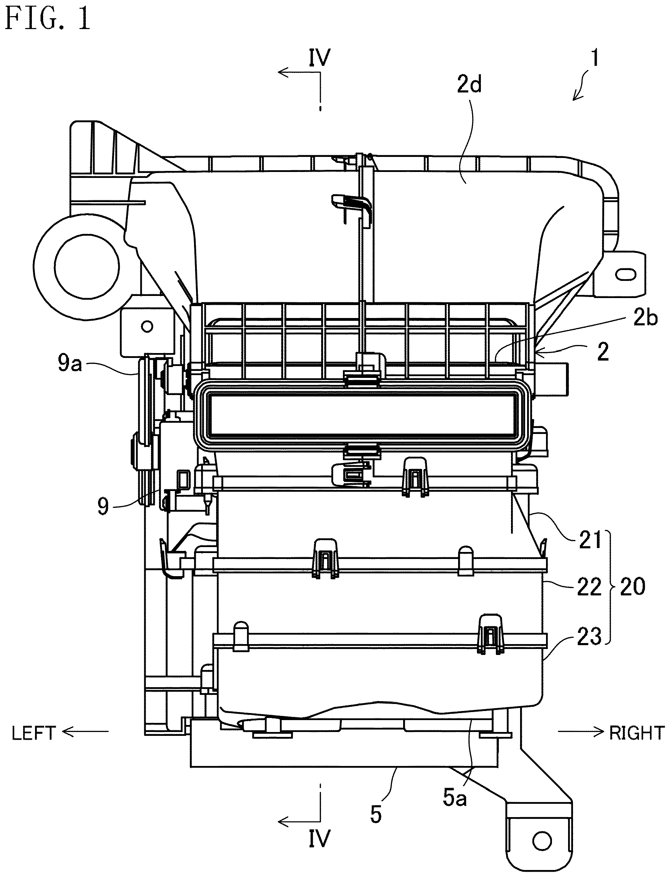

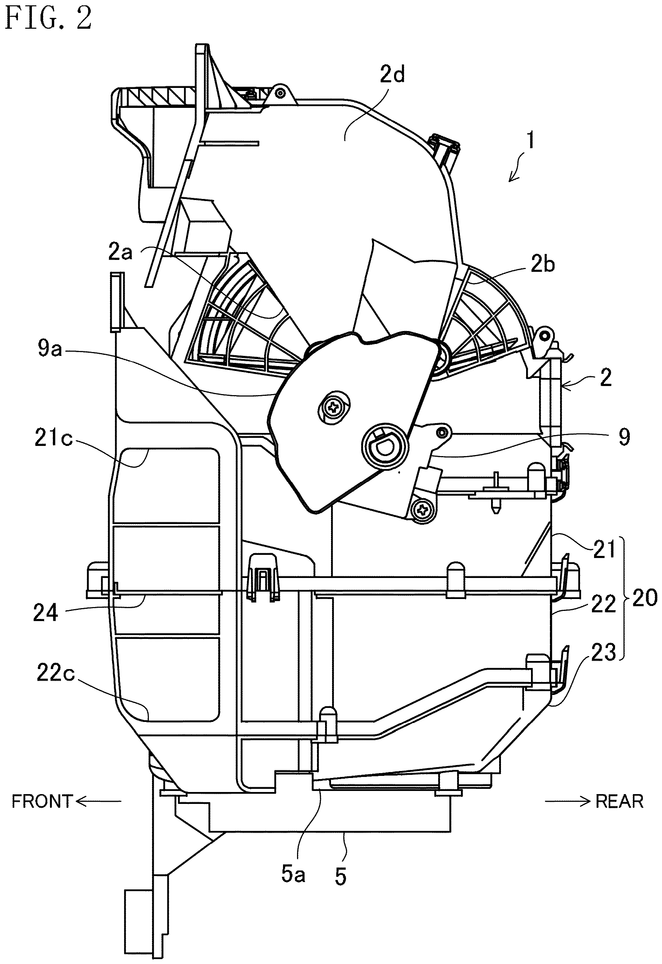

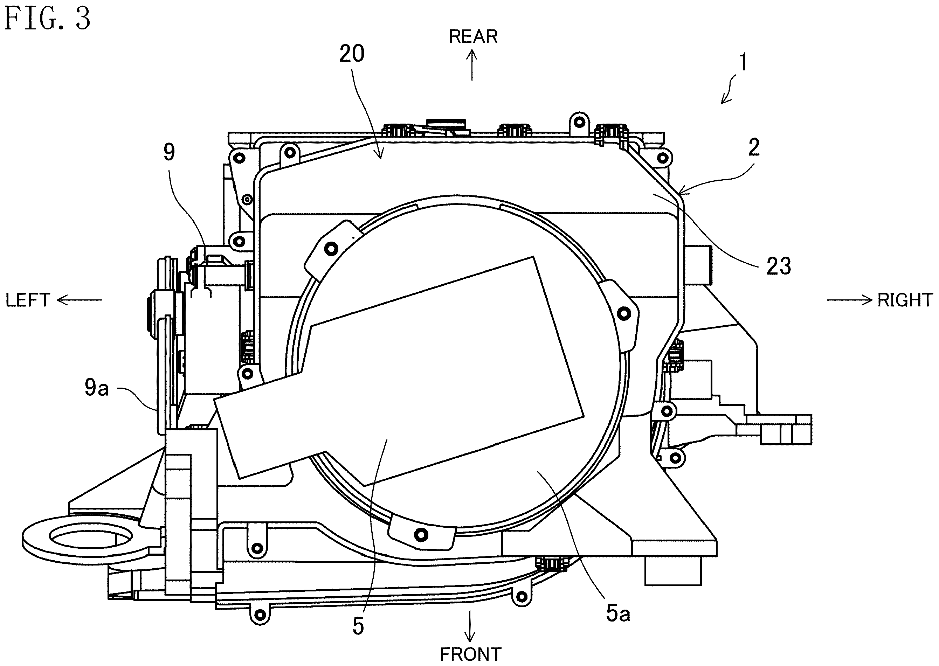

FIG. 1 illustrates a vehicle air-conditioning air blower 1 according to an embodiment of the present invention, as viewed from the rear side of a vehicle. FIG. 2 illustrates the vehicle air-conditioning air blower 1, as viewed from the left side of the vehicle. FIG. 3 illustrates the vehicle air-conditioning air blower 1, as viewed from the lower side of the vehicle. This vehicle air-conditioning air blower 1 is disposed in, for example, a cabin of an automobile to blow air-conditioning air, and forms a vehicle air conditioner together with an air conditioning unit (not shown) and a refrigeration cycle system.

The air conditioning unit includes, for example, a cooling heat exchanger serving as an evaporator of a refrigeration cycle, a heating heat exchanger serving as a heater core, an air mixing damper, a blowing direction switching damper, and an air-conditioning casing housing these components. Air-conditioning air blown from the vehicle air-conditioning air blower 1 is introduced into the air-conditioning casing, and passes through the cooling heat exchanger and the heating heat exchanger to generate air-conditioned wind having an intended temperature. Then, the air-conditioned wind is fed to areas inside the cabin in accordance with a blowout mode selected by the blowing direction switching damper. The temperature of the air-conditioned wind is adjusted by the amount of air which passes through the heating heat exchanger which is determined by the air mixing damper.

In the following description of this embodiment, the front, rear, left, and right sides of the vehicle will be simply referred to as the "front," "rear," "left," and "right," respectively. These definitions are merely prepared for easy understanding, and do not limit how the vehicle air-conditioning air blower is actually used, how the vehicle air-conditioning air blower is actually installed, and how the vehicle air-conditioning air blower is actually assembled.

The vehicle air-conditioning air blower 1 is housed in an instrument panel (not shown) arranged in a front end portion of the cabin of the vehicle together with the air conditioning unit. The air conditioning unit is disposed in a substantially laterally central portion of the interior of the instrument panel, while the vehicle air-conditioning air blower 1 is disposed inside the instrument panel on the passenger's side of the air conditioning unit (on the left side of the air conditioning unit in the case of a right-hand drive vehicle, or on the right side thereof in the case of a left-hand drive vehicle). This embodiment illustrates a situation where the vehicle air-conditioning air blower 1 is disposed in a right portion of the vehicle. However, if a vehicle air-conditioning air blower 1 is disposed in a left portion of the vehicle, this vehicle air-conditioning air blower 1 has a structure bilaterally symmetrical to that of the vehicle air-conditioning air blower 1 according to this embodiment. Thus, this situation will not be described in detail.

### (Configuration of Vehicle)

Although not shown, the vehicle including the vehicle air-conditioning air blower 1 includes a dashboard (a partition member) for separating an engine compartment and a cabin from each other. The engine compartment is formed in a front portion of the vehicle, and includes an engine, a transmission, and other components. The dashboard extends in a substantially vertical direction. A cowl extending in a lateral direction is disposed on an upper portion of the dashboard. The cowl has a communication port communicating with the outside of the cabin. Since the cowl is disposed outside the cabin, rainwater, car-washing water, snow, and any other substance may enter the cowl.

### (Configuration of Vehicle Air-Conditioning Air Blower)

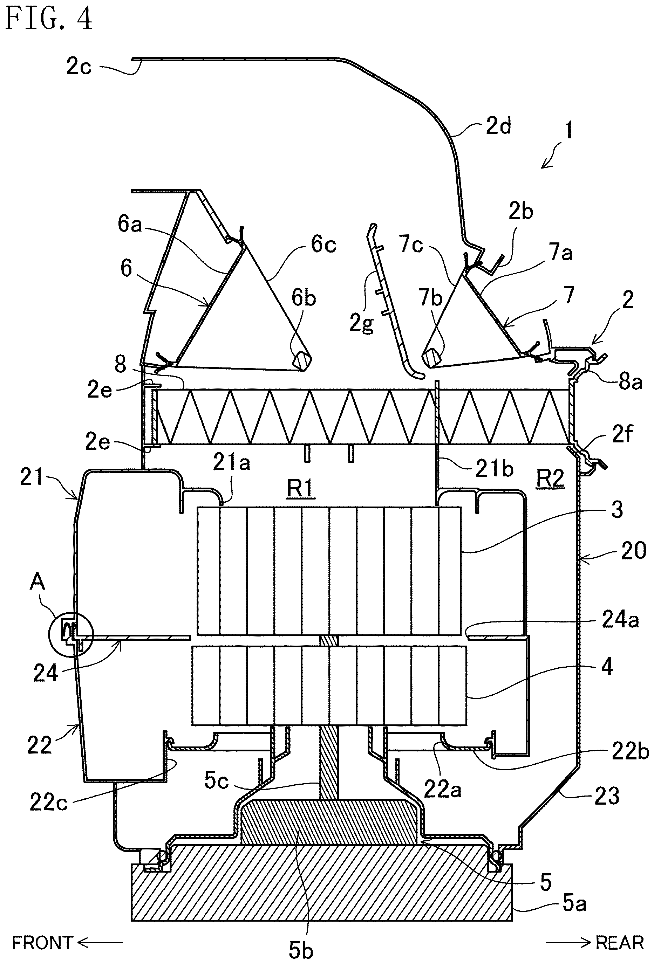

As shown also in FIG. 4, the vehicle air-conditioning air blower 1 includes a blowing casing 2, an upper blower fan (a first blower fan) 3, a lower blower fan (a second blower fan) 4, a motor 5 for rotationally driving the upper and lower blower fans 3 and 4, a first inside/outside air switching damper 6, a second inside/outside air switching damper 7, an air filter 8, and an inside/outside air switching actuator 9 (illustrated in FIGS. 1 and 2). The upper and lower blower fans 3 and 4, the first and second inside/outside air switching dampers 6 and 7, and the air filter 8 are housed in the blowing casing 2.

An upper portion of the blowing casing 2 has front and rear inside air inlets 2a and 2b illustrated in FIG. 2 and other figures, and an outside air inlet 2c illustrated in FIG. 4. As illustrated in FIG. 2, the front inside air inlet 2a is formed through a portion of the upper portion of the blowing casing 2 closer to the front end of the blowing casing 2 than a central portion thereof in the front-to-rear direction, and opens to the interior of the cabin. The rear inside air inlet 2b is formed through a portion of the upper portion of the blowing casing 2 closer to the rear end of the blowing casing 2 than the central portion thereof in the front-to-rear direction, and opens to the interior of the cabin. Air in the cabin (inside air) can be introduced into the blowing casing 2 through the front and rear inside air inlets 2a and 2.

As illustrated in FIG 4, the upper portion of the blowing casing 2 has an outside air inlet duct portion 2d integrated with the blowing casing 2 to bulge upward from a portion of the blowing casing 2 between the front and rear inside air inlets 2a and 2b. An upper portion of the outside air inlet duct portion 2d extends forward. The outside air inlet 2c opens through a front end of the outside air inlet duct portion 2d. The outside air inlet duct portion 2d is connected to the cowl. The outside air inlet 2c communicates with the outside of the cabin through the cowl. Air outside the cabin (outside air) can be introduced into the blowing casing 2 through the outside air inlet 2c.

As illustrated in FIG 4, the filter 8 is housed in a portion of the interior of the blowing casing 2 below the front and rear inside air inlets 2a and 2b and the outside air inlet 2c. The filter 8 is formed in the shape of a plate, and extends horizontally. A peripheral portion of the filter 8 is supported by filter support portions 2e provided inside the blowing casing 2. A rear wall portion of the blowing casing 2 has a filter insertion hole 2f through which the filter 8 is to be inserted into the blowing casing 2. The filter insertion hole 2f is closed by a lid portion 8a configured as a rear end portion of the filter 8. Note that the filter 8 may be made of, for example, a general nonwoven fabric.

A partition wall portion 2g is provided above the filter 8 inside the blowing casing 2. The partition wall portion 2g extends in the top-to-bottom direction, and is slightly inclined so as to be closer to the rear side of the blowing casing 2 toward its lower end portion. An upper portion of the interior of the blowing casing 2 has a first air passage R1 in front of the partition wall portion 2g, and a second air passage R2 behind the partition wall portion 2g. The width of the first air passage R1 in the front-to-rear direction is set to be greater than that of the second air passage R2 in the front-to-rear direction, and the cross-sectional area of the first air passage R1 is larger than that of the second air passage R2.

An upstream end portion (upper end portion) of the first air passage R1 communicates with the front inside air inlet 2a and the outside air inlet 2c. An upstream end portion (upper end portion) of the second air passage R2 communicates with the rear inside air inlet 2b and the outside air inlet 2c. The first and second air passages R1 and R2 communicate with the common outside air inlet 2c, while communicating with the separate inside air inlets 2a and 2b, respectively. This allows inside air and outside air to be introduced into both of the first and second air passages R1 and R2.

The first inside/outside air switching damper 6 is disposed in front of the partition wall portion 2g inside the blowing casing 2, and includes a closing plate portion 6a, a shaft portion 6b, and end plate portions 6c. The closing plate portion 6a extends in the lateral direction. The shaft portion 6b also extends in the lateral direction, and is supported by both lateral side wall portions of the blowing casing 2 so as to be turnable. The end plate portions 6c are respectively provided near both lateral ends of the shaft portion 6b. The end plate portions 6c extend radially from the shaft portion 6b, and are respectively arranged adjacent to the lateral end portions of the closing plate portion 6a. The closing plate portion 6a, the shaft portion 6b, and the end plate portions 6c are integrated together. The first inside/outside air switching damper 6 turns around the center line of the shaft portion 6b. This allows switching to be made between the state where the first inside/outside air switching damper 6 has turned forward as shown in FIG. 4 and the state where the first inside/outside air switching damper 6 has turned rearward although not shown. If the first inside/outside air switching damper 6 has turned forward, the front inside air inlet 2a is closed, and the outside air inlet 2c is opened. This prevents the inside air from flowing into the blowing casing 2, and allows the outside air to be introduced into an upstream portion of the first air passage R1. On the other hand, if the first inside/outside air switching damper 6 has turned rearward, the front inside air inlet 2a is opened, and the outside air inlet 2c is closed. This prevents the outside air from flowing into the blowing casing 2, and allows the inside air to be introduced into the upstream portion of the first air passage R1.

The second inside/outside air switching damper 7 is disposed behind the partition wall portion 2g inside the blowing casing 2, and includes a closing plate portion 7a, a shaft portion 7b, and end plate portions 7c, just like the first inside/outside air switching damper 6. The second inside/outside air switching damper 7 turns around the center line of the shaft portion 7b. This allows switching to be made between the state where the second inside/outside air switching damper 7 has turned rearward as shown in FIG. 4 and the state where the second inside/outside air switching damper 7 has turned forward although not shown. If the second inside/outside air switching damper 7 has turned rearward, the rear inside air inlet 2b is closed, and the outside air inlet 2c is opened. This prevents the inside air from flowing into the blowing casing 2, and allows the outside air to be introduced into an upstream portion of the second air passage R2. On the other hand, if the second inside/outside air switching damper 7 has turned forward, the rear inside air inlet 2b is opened, and the outside air inlet 2c is closed. This prevents the outside air from flowing into the blowing casing 2, and allows the inside air to be introduced into the upstream portion of the second air passage R2.

The first and second inside/outside air switching dampers 6 and 7 are driven by the inside/outside air switching actuator 9 illustrated in FIGS. 1, 2, and other figures. Although not shown, the inside/outside air switching actuator 9 is controlled by an air-conditioning control apparatus. A link member 9a engages with the shaft portion 6b of the first inside/outside air switching damper 6 and the shaft portion 7b of the second inside/outside air switching damper 7, and is turned by the inside/outside air switching actuator 9 to allow the first and second inside/outside air switching dampers 6 and 7 to interlock with each other. Since a well-known technique can be used for the structure in which the first and second inside/outside air switching dampers 6 and 7 interlock with each other using the link member 9a, the structure will not be described in detail. Further, the first and second inside/outside air switching dampers 6 and 7 may be separately driven without using the link member 9a.

In this embodiment, the first and second inside/outside air switching dampers 6 and 7 are driven as follows. Specifically, as illustrated in FIG. 4, an optional one of three modes, i.e., an outside-air introduction mode, an inside-air circulation mode, and an inside-outside air double flow mode, can be selected. In the outside-air introduction mode, the first inside/outside air switching damper 6 is turned forward, and the second inside/outside air switching damper 7 is turned rearward. In the inside-air circulation mode, the first inside/outside air switching damper 6 is turned rearward, and the second inside/outside air switching damper 7 is turned forward. In the inside-outside air double flow mode, the first inside/outside air switching damper 6 is turned forward, and the second inside/outside air switching damper 7 is turned forward.

In the outside-air introduction mode, since the first inside/outside air switching damper 6 turns forward, and the second inside/outside air switching damper 7 turns rearward, only outside air is introduced into the first and second air passages R1 and R2. In the inside-air circulation mode, the first inside/outside air switching damper 6 turns rearward, and the second inside/outside air switching damper 7 turns forward. This allows only inside air to be introduced into the first and second air passages R1 and R2. In the inside-outside air double flow mode, the first inside/outside air switching damper 6 turns forward, and the second inside/outside air switching damper 7 turns forward. This allows outside air to be introduced into the first air passage R1, and allows inside air to be introduced into the second air passage R2. The inside-outside air double flow mode is used during heating.

Switching is made among the inside-air circulation mode, the outside-air introduction mode, and the inside-outside air double flow mode by a well-known automatic air-conditioning control technique. Selecting the inside-outside air double flow mode allows outside air, which is relatively dry in winter, to be fed to a defrost outlet to successfully defog a windshield glass, and allows relatively warm inside air to be fed to a heat outlet to improve heating efficiency.

A scroll casing 20 housing the upper and lower blower fans 3 and 4 is provided below the inside air inlets 2a and 2b and the outside air inlet 2c of the blowing casing 2. As illustrated in FIGS. 1 and 2, the scroll casing 20 is divided into an upper scroll casing 21 in which the upper blower fan 3 is housed, and a lower scroll casing 22 in which the lower blower fan 4 is housed. A bottom wall member 23 is provided for a lower portion of the scroll casing 20. The bottom wall member 23 is a component of the scroll casing 20. The upper scroll casing 21, the lower scroll casing 22, and the bottom wall member 23 form the scroll casing 20. Further, a partition plate 24 that partitions the interior of the scroll casing 20 into upper and lower spaces is disposed inside the scroll casing 20, and is also a component of the scroll casing 20.

An upper wall portion of the upper scroll casing 21 has a substantially circular first bell mouth orifice 21a that opens to the interior of the blowing casing 2. The first bell mouth orifice 21a faces a lower surface of the filter 8, and communicates with the first air passage R1. Further, the upper wall of the upper scroll casing 21 is provided with a protruding wall portion 21b protruding upward. The protruding wall portion 21b is positioned behind the edge of the first bell mouth orifice 21a, and extends in the lateral direction. An upper end of the protruding wall portion 21b reaches an area near the lower end portion of the partition wall portion 2g. The protruding wall portion 21b and the partition wall portion 2g partition a portion of the interior of the blowing casing 2 above the upper scroll casing 21 into front and rear spaces. As a result, the first air passage R1 is formed in front of the protruding wall portion 21b and the partition wall portion 2g, and the second air passage R2 is formed behind the protruding wall portion 21b and the partition wall portion 2g.

The first air passage R1 communicates with the interior of the upper scroll casing 21 through the first bell mouth orifice 21a. The interior of the upper scroll casing 21 serves as a portion of the first air passage R1. A portion of the blowing casing 2 above the partition plate 24 is defined as the first air passage R1. The upper blower fan 3 is disposed in the first air passage R1 inside the upper scroll casing 21. The first blower fan 3 rotating inside the upper scroll casing 21 allows the first blower fan 3 to send air in the first air passage R1 as air-conditioning air.

As illustrated in FIG. 2, a front portion of a left side wall portion of the upper scroll casing 21 has an upper air outlet 21c connected to the air conditioning unit. A downstream end of the first air passage R1 communicates with the upper air outlet 21c, and air in the first air passage R1 is blown out of the upper air outlet 21c to the outside of the upper scroll casing 21.

As illustrated in FIG. 4, the second air passage R2 extends downward through a rear portion of the interior of the upper scroll casing 21, and a lower end portion of the second air passage R2 reaches the bottom wall member 23. A lower wall of the lower scroll casing 22 is spaced apart upward from the bottom wall member 23, and the lower end portion of the second air passage R2 is located between the lower wall of the lower scroll casing 22 and the bottom wall member 23. The lower wall of the lower scroll casing 22 is provided with a bell mouth component 22b having a substantially circular second bell mouth orifice 22a. The second bell mouth orifice 22a faces the bottom wall member 23, and communicates with the lower end portion of the second air passage R2. The second bell mouth orifice 22a is positioned concentrically with the first bell mouth orifice 21a. The bell mouth component 22b is fitted into a peripheral portion of an opening 22c of the lower wall portion of the lower scroll casing 22.

The lower end portion of the second air passage R2 communicates with the interior of the lower scroll casing 22 through the second bell mouth orifice 22a. The interior of the lower scroll casing 22 serves as a portion of the second air passage R2. A portion of the lower scroll casing 22 below the partition plate 24 is defined as a portion of the second air passage R2. The lower blower fan 4 is disposed in the second air passage R2 inside the lower scroll casing 22. The lower blower fan 4 rotating inside the lower scroll casing 22 allows the lower blower fan 4 to send air in the second air passage R2 as air-conditioning air.

As illustrated in FIG. 2, a front portion of a left side wall portion of the lower scroll casing 22 has a lower air outlet 22c connected to the air conditioning unit. The lower air outlet 22c is located directly below the upper air outlet 21c. A downstream end of the second air passage R2 communicates with the lower air outlet 22c, and air in the second air passage R2 is blown out of the lower air outlet 22c to the outside of the lower scroll casing 22.

The bottom wall member 23 covers a lower end portion of the lower scroll casing 22, and is a cover-like member that covers the lower end portion. A peripheral portion of the bottom wall member 23 is formed so as to be fitted to a peripheral portion of the lower end portion of the lower scroll casing 22 to prevent air from leaking from the gap between the peripheral portion of the bottom wall member 23 and the peripheral portion of the lower end portion of the lower scroll casing 22.

A motor 5 is attached to the bottom wall member 23 via a motor attachment member 5a. The motor attachment member 5a is fixed to the bottom wall member 23. The motor 5 is attached to the motor attachment member 5a. The motor 5 includes a body 5b including a rotor and other components, and a rotation shaft 5c. The rotation shaft 5c protrudes upward from the body 5b, and is disposed concentrically with the first and second bell mouth orifices 21a and 22a. An upper end portion of the rotation shaft 5c is located above the second bell mouth orifice 22a.

The first and second blower fans 3 and 4 are fixed to and rotate together with the rotation shaft 5c. Thus, a voltage applied to the body 5b of the motor 5 causes a turning force of the rotation shaft 5c to be transferred to the first and second blower fans 3 and 4. This allows the first and second blower fans 3 and 4 to respectively rotate inside the first and second air passages R1 and R2. The body 5b of the motor 5 is connected to an air-conditioning control apparatus (not shown), which applies a voltage to the body 5b so that the motor 5 rotates at an intended rotational speed.

### (Fitting Structure of Upper and Lower Scroll Casings to Each Other)

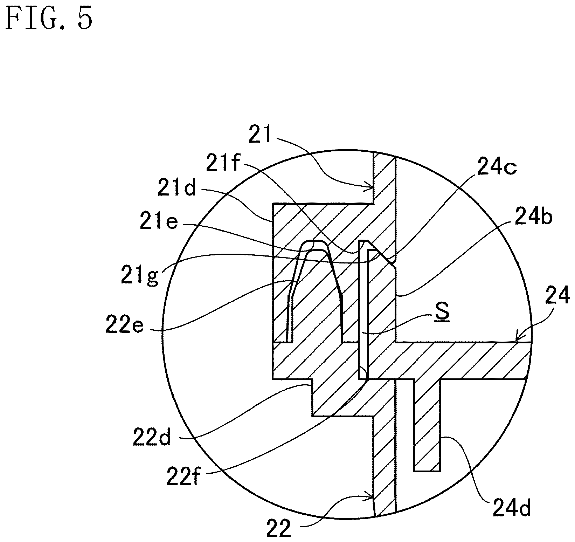

For example, as illustrated in FIG. 5, a lower portion of the upper scroll casing 21 and an upper portion of the lower scroll casing 22 are fitted to each other, thereby integrating the upper and lower scroll casings 21 and 22 together.

A fitting structure of the upper and lower scroll casings 21 and 22 to each other will now be described in detail. The upper portion of the lower scroll casing 22 is configured as a lower overhanging portion 22d overhanging radially outward of the scroll casing 20. The lower overhanging portion 22d is circumferentially provided all around the upper portion of the lower scroll casing 22. FIG. 4 specifically illustrates only a portion A (on the left side of FIG. 4) of the fitting structure of the upper and lower scroll casings 21 and 22 to each other. The fitting structure of the upper and lower scroll casings 21 and 22 to each other is not illustrated on the right side of FIG. 4. However, the structure in which the upper and lower scroll casings 21 and 22 are fitted to each other is formed all around the upper and lower scroll casings 21 and 22.

An outer portion of the lower overhanging portion 22d in the radial direction of the scroll casing 20 has a lower fitting projection 22e projecting upward. The lower fitting projection 22e forms a ridge continuous in the circumferential direction of the lower scroll casing 22. A portion of the lower fitting projection 22e near the distal end thereof in the direction of projection thereof is tapered such that a dimension of this portion in the radial direction of the scroll casing 20 decreases toward the distal end.

An inner portion of the lower overhanging portion 22d in the radial direction of the scroll casing 20 has a step portion 22f to which a peripheral portion of the partition plate 24 is fitted. The step portion 22f and the lower fitting projection 22e are spaced apart from each other in the radial direction of the scroll casing 20.

The lower portion of the upper scroll casing 21 is configured as an upper overhanging portion 21d overhanging radially outward of the scroll casing 20. The upper overhanging portion 21d is circumferentially provided all around the lower portion of the upper scroll casing 21. An outer portion of the upper overhanging portion 21d in the radial direction of the scroll casing 20 has an upper fitting groove 21e into which the lower fitting projection 22e is inserted, and fitted. The upper fitting groove 21e opens downward. The upper fitting groove 21e forms a valley continuous in the circumferential direction of the upper scroll casing 21. A dimension of the upper fitting groove 21e in the radial direction of the scroll casing 20 decreases toward the bottom (upper end) of the upper fitting groove 21e. While the lower fitting projection 22e is inserted into the upper fitting groove 21e, a side surface of the lower fitting projection 22e is in contact with an inner surface of the upper fitting groove 21e.

An inner portion of the upper overhanging portion 21d in the radial direction of the scroll casing 20 has a recess 21f into which an inner fitting portion of the partition plate 24 to be described below is fitted. The recess 21f and the upper fitting groove 21e are spaced apart from each other in the radial direction of the scroll casing 20. The recess 21f opens downward just like the upper fitting groove 21e, and forms a valley continuous in the circumferential direction of the upper scroll casing 21. The bottom (upper end) of the recess 21f and the bottom of the upper fitting groove 21e are located at substantially the same height.

The inner surface of the recess 21f has a scroll-side inclined surface 21g. The scroll-side inclined surface 21g extends along a partition plate-side inclined surface 24c of the partition plate 24 to be described below, and abuts against the partition plate-side inclined surface 24c. The scroll-side inclined surface 21g is inclined downward toward the interior of the scroll casing 20.

An outer portion of the upper scroll casing 21 and an outer portion of the lower scroll casing 22 are fastened to each other with a fastening member, such as screws, while the lower fitting projection 22e is fitted into the upper fitting groove 21e.

### (Configuration of Partition Plate)

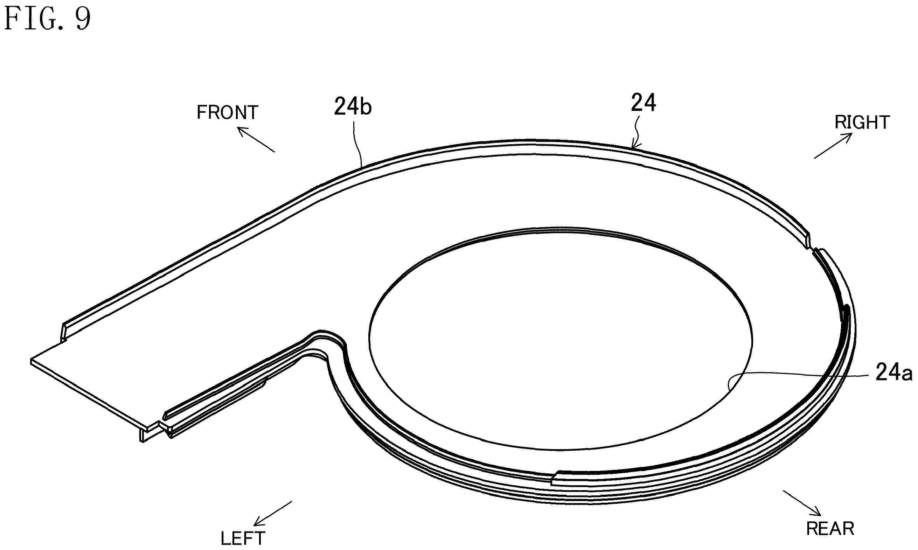

As illustrated in FIG. 4, the partition plate 24 is disposed in a vertically intermediate portion of the scroll casing 20, and extends in the lateral direction and the front-to-rear direction. The partition plate 24 may be made of a resin material similar to that of the upper and lower scroll casing 21 and 22. As illustrated also in FIG 9 and other figures, the partition plate 24 has a through hole 24a. The through hole 24a is substantially circular, and is positioned concentrically with the first and second bell mouth orifices 21a and 22a. The inside diameter of the through hole 24a is set to be larger than that of each of the first and second bell mouth orifices 21a and 22a and to be smaller than that of the opening 22c of the lower wall portion of the lower scroll casing 22.

A peripheral portion of the partition plate 24 has an inner fitting portion 24b protruding upward. The inner fitting portion 24b is fitted into a portion of the lower portion of the upper scroll casing 21 into which the lower scroll casing 22 is fitted, i.e., the recess 21f closer to the inside of the upper scroll casing 21 than the upper fitting groove 21e of the upper scroll casing 21 is. The inner fitting portion 24b is formed in the shape of a plate protruding upward from the peripheral portion of the partition plate 24. As illustrated in FIG. 5, an upper end surface of the inner fitting portion 24b has the partition plate-side inclined surface 24c that is inclined downward toward either the inside or outside of the scroll casing 2. In this embodiment, the partition plate-side inclined surface 24c is inclined downward toward the inside of the scroll casing 2. The partition plate-side inclined surface 24c extends along the scroll-side inclined surface 21g of the upper scroll casing 21, and is in contact with the scroll-side inclined surface 21g while the inner fitting portion 24b is fitted into the recess 21f of the upper scroll casing 21.

A dimension of the inner fitting portion 24b in the top-to-bottom direction is set such that while the inner fitting portion 24b is fitted into the recess 21f of the upper scroll casing 21, the inner fitting portion 24b is sandwiched between the inner surface of the recess 21f and the step portion 22f of the lower scroll casing 22 in the top-to-bottom direction. This prevents the partition plate 24 from moving not only in the top-to-bottom direction but also in the lateral direction and the front-to-rear direction with respect to the upper and lower scroll casings 21 and 22.

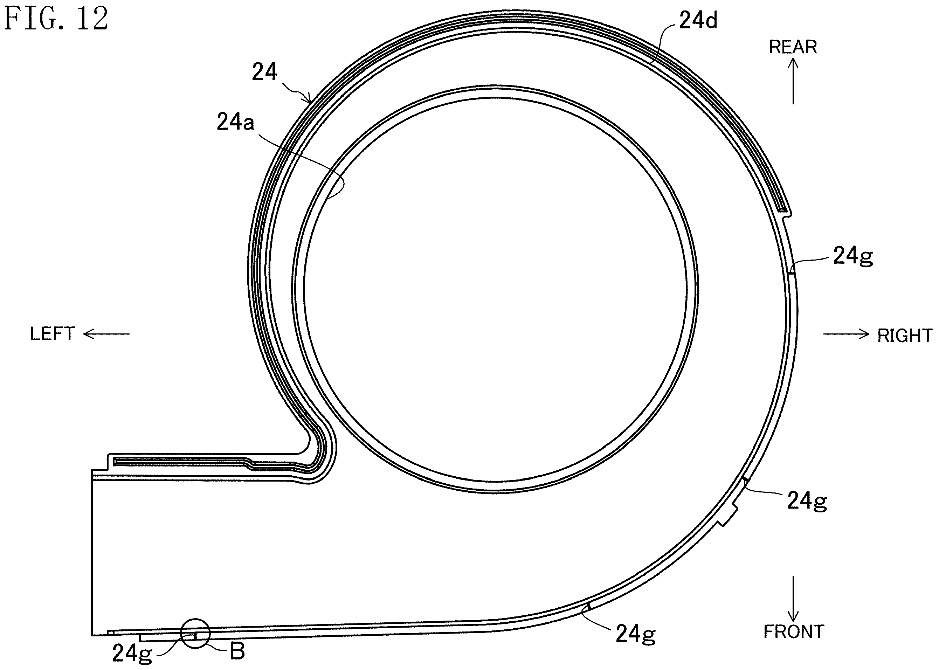

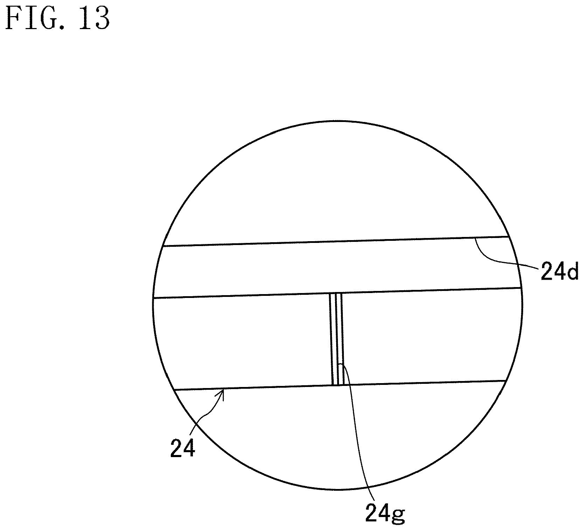

As illustrated in FIGS. 12 and 13, a peripheral portion of a lower surface of the partition plate 24 has a plurality of small protrusions 24g abutting against the upper portion of the lower scroll casing 22. The protrusions 24g are circumferentially spaced apart from one another. As illustrated in FIG. 5, the peripheral portion of the partition plate 24 is formed so as to be fitted to the step portion 22f of the lower scroll casing 22. The lower surface of the partition plate 24 only partially has the protrusions 24g protruding downward. The projections 24g are long in the radial direction of the scroll casing 20. If the protrusions 24g, which are small, are in contact with the step portion 22f of the lower scroll casing 22, only portions of the lower surface of the partition plate 24 near the protrusions 24 are spaced apart from the step portion 22f to form a space therebetween. Meanwhile, portions of the lower surface of the partition plate 24 apart from the protrusions 24g are in contact with the step portion 22f as illustrated in FIG. 5. Bringing such small protrusions 24b into contact with the step portion 22f of the lower scroll casing 22 reduces wobbling of the partition plate 24. Thus, noise is less likely to be generated.

As illustrated in FIG. 5, the lower surface of the partition plate 24 has a projecting plate portion 24d projecting downward. The projecting plate portion 24d is located near the peripheral portion of the partition plate 24, and is radially closer to the inside of the scroll casing 20 than the inner fitting portion 24b is. The projecting plate portion 24d is radially apart from the inner surface of the lower scroll casing 22 toward the inside of the scroll casing 20 to form a space between the projecting plate portion 24d and the inner surface of the lower scroll casing 22.

The inner fitting portion 24b is spaced apart radially inward from the upper overhanging portion 21d of the upper scroll casing 21. Thus, a space S (illustrated only in FIG. 5) is formed between the inner peripheral surface of the upper overhanging portion 21d of the upper scroll casing 21 and the inner fitting portion 24b. The space S communicates with spaces between the portions of the lower surface of the partition plate 24 near the protrusions 22 and the step portion 22f of the lower scroll casing 22.

### (How Scroll Casing Is To Be Assembled)

To assemble a scroll casing 20 of a vehicle air-conditioning air blower 1 according to this embodiment, a partition plate 24 is first assembled to an upper scroll casing 21. At this time, an inner fitting portion 24b of the partition plate 24 is inserted into a recess 21f of the upper scroll casing 21. Meanwhile, since a partition plate-side inclined surface 24c of the partition plate 24 is inclined downward toward the inside of the scroll casing 20, the partition plate-side inclined surface 24c in contact with a scroll-side inclined surface 21g of the recess 21f allows the inner fitting portion 24b to be guided to the bottom of the recess 21f. This enables easy insertion of the inner fitting portion 24b.

Then, a lower scroll casing 22 is assembled to the upper scroll casing 21. At this time, a lower fitting projection 22e of the lower scroll casing 22 is inserted, and fitted, into an upper fitting groove 21e of the upper scroll casing 21. In this state, the inner fitting portion 24b is sandwiched between the inner surface of the recess 21f of the upper scroll casing 21 and a step portion 22f of the lower scroll casing 22 in the top-to-bottom direction. Then, an outer portion of the scroll casing 20 is fastened with screws, thereby integrating the upper and lower scroll casings 21 and 22 and the partition plate 24 together. Note that the bottom wall member 23, the motor 5, and other components are also assembled to the scroll casing 20.

### (Advantages of Embodiment)

As can be seen from the foregoing description, according to the vehicle air-conditioning air blower 1 of this embodiment, if operations of the inside/outside air switching dampers 6 and 7 allow the inside air inlets 2a and 2b to open, and allow the outside air inlet 2c to close, the vehicle air-conditioning air blower 1 operates in the inside-air circulation mode in which inside air is introduced through the inside air inlets 2a and 2b thereinto. In the inside-air circulation mode, the upper and lower blower fans 3 and 4 rotating allow the inside air introduced through the inside air inlets 2a and 2b to flow through the first and second air passages R1 and R2 and to be then sent as air-conditioning air.

When the inside air inlets 2a and 2b are closed, and the outside air inlet 2c is opened by operations of the inside/outside air switching dampers 6 and 7, the vehicle air-conditioning air blower 1 operates in the outside-air introduction mode in which outside air is introduced through the outside air inlet 2c thereinto. In the outside-air introduction mode, the upper and lower blower fans 3 and 4 rotating allow the outside air introduced through the outside air inlet 2c to flow through the first and second air passages R1 and R2 and to be then sent as air-conditioning air.

Further, when the inside air inlets 2a and 2b and the outside air inlet 2c are opened by operations of the inside/outside air switching dampers 6 and 7, the vehicle air-conditioning air blower 1 operates in the inside-outside air double flow mode. The upper and lower blower fans 3 and 4 rotating allow the outside air introduced through the outside air inlet 2c to flow through the first air passage R1, and allow the inside air introduced through the inside air inlets 2a and 2b to flow through the second air passage R2. Thus, a combination of the outside air and the inside air is sent as air-conditioning air. In other words, the vehicle air-conditioning air blower 1 according to this embodiment can select an optional one of the outside-air introduction mode, the inside-air circulation mode, and the inside-outside air double flow mode, and send air.

For example, rainwater or car-washing water may enter the interior of the scroll casing 20 through the outside air inlet 2c. If water enters the interior of the scroll casing 20, the water may be accumulated on the partition plate 24 of the scroll casing 20. A current of air in the scroll casing 20 or any other factor is supposed to cause the water accumulated on the partition plate 24 to flow toward the peripheral portion of the partition plate 24. Meanwhile, the peripheral portion of the partition plate 24 has the inner fitting portion 24b which is to be fitted into the lower portion of the upper scroll casing 21 and which protrudes upward. Thus, the water is blocked by the inner fitting portion 24b.

If the static pressure of the scroll casing 20 is high under high airflow conditions, the water accumulated on the partition plate 24 is scattered by rotation of the upper blower fan 3 to attempt to flow beyond the inner fitting portion 24b. However, the water hardly flows through the gap between the inner fitting portion 24b, which is fitted into the lower portion of the upper scroll casing 21, and the lower portion of the upper scroll casing 21 toward the outside of the scroll casing 20. This reduces water seeping to the outside of the scroll casing 20. Further, an area where the lower portion of the upper scroll casing 21 and the upper portion of the lower scroll casing 22 are fitted to each other is located outside the inner fitting portion 24b. Thus, even if the water accumulated on the partition plate 24 flows beyond the inner fitting portion 24b, the area where the lower portion of the upper scroll casing 21 and the upper portion of the lower scroll casing 22 are fitted to each other reduces water seeping to the outside. Thus, a multiple watertight structure is achieved. This eliminates the need for integrating a vertical plate having a high height with the partition plate 24, thus preventing the ventilation capacity from decreasing and preventing the ease of assembling the partition plate to the scroll casing 20 and the ease of manufacturability from also decreasing.

Further, for example, if the water accumulated on the partition plate 24 flows beyond the inner fitting portion 24b, a space formed between the upper portion of the lower scroll casing 22 and the lower surface of the partition plate 24 allows the water to be introduced through the space between the upper portion of the lower scroll casing 22 and the lower surface of the partition plate 24 into the lower scroll casing 22.

Further, the partition plate-side inclined surface 24c of the partition plate 24 is inclined downward toward the inside of the scroll casing 20, and the scroll-side inclined surface 21g of the upper scroll casing 21 is also inclined in a similar manner. Thus, when the inner fitting portion 24b of the partition plate 24 is to be fitted into the lower portion of the upper scroll casing 21, simply moving the inner fitting portion 24b of the partition plate 24 in the direction of fitting of the inner fitting portion 24b allows the partition plate 24 and the upper scroll casing 21 to be aligned with each other in the inside-to-outside direction. This can further improve the ease of assembling the partition plate 24.

### INDUSTRIAL APPLICABILITY

As can be seen from the foregoing description, a vehicle air-conditioning air blower according to the present invention may be used, for example, as an air blower unit for a vehicle air conditioner.

### DESCRIPTION OF REFERENCE CHARACTERS

- 1: Vehicle Air-Conditioning Air Blower
- 2: Blowing Casing
- 2a, 2b: Inside Air Inlet
- 2c: Outside Air Inlet
- 3: Upper Blower Fan (First Blower Fan)
- 4: Lower Blower Fan (Second Blower Fan)
- 6: First Inside/Outside Air Switching Damper
- 7: Second Inside/Outside Air Switching Damper
- 20: Scroll Casing
- 21: Upper Scroll Casing
- 21e: Upper Fitting Groove
- 21f: Recess
- 21g: Scroll-side Inclined Surface
- 22: Lower Scroll Casing
- 22e: Lower Fitting Projection
- 24: Partition Plate
- 24b: Inner Fitting Portion
- 24c: Partition Plate-side Inclined Surface
- R1: First Air Passage
- R2: Second Air Passage

## Claims

1. An air-conditioning air blower (1) configured to be mounted in a vehicle comprising:
a casing (2) having an inside air inlet (2a, 2b) through which air inside a cabin is introduced into the casing (2), and an outside air inlet (2c) through which air outside the cabin is introduced into the casing (2), the casing (2) further having a first air passage (R1) and a second air passage (R2) each communicating with both of the inside air inlet (2a, 2b) and the outside air inlet (2c), the casing (2) housing an inside/outside air switching damper (6, 7) that opens and closes the inside air inlet (2a, 2b) and the outside air inlet (2c);
a first blower fan (3) disposed in the first air passage (R1); and
a second blower fan (4) disposed in the second air passage (R2),
the first blower fan (3) sending air in the first air passage (R1) as air-conditioning air, the second blower fan (4) sending air in the second air passage (R2) as air-conditioning air,
the inside air inlet (2a, 2b) and the outside air inlet (2c) being formed through an upper portion of the casing (2),
a scroll casing (20) that houses the first and second blower fans (4) being provided below the inside air inlet (2a, 2b) and the outside air inlet (2c) of the casing (2),
the scroll casing (20) being divided into an upper scroll casing (21) in which the first blower fan (3) is housed and a lower scroll casing (22) in which the second blower fan (4) is housed, a lower portion of the upper scroll casing (21) and an upper portion of the lower scroll casing (22) being fitted to each other, thereby integrating the upper (21) and lower (22) scroll casings together,
the scroll casing (20) including therein a partition plate (24) partitioning an interior of the scroll casing (20) into upper and lower spaces, the partition plate (24) being separate from the scroll casing (20), the upper space above the partition plate (24) forming the first air passage (R1), the lower space below the partition plate (24) forming the second air passage (R2),
a peripheral portion of the partition plate (24) having an inner fitting portion (24b) that protrudes upward, the inner fitting portion (24b) being fitted inside a portion of the lower portion of the upper scroll casing (21) into which the lower scroll casing (22) is fitted,
said air-conditioning air blower (1) being **characterized in that** the inner fitting portion (24b) is formed in a shape of a plate protruding upward, and the inner fitting portion (24b) is facing an inner peripheral surface of the lower portion of the upper scroll casing (21), an upper end surface of the inner fitting portion (24b) has a partition plate-side inclined surface (24c) that is inclined downward toward either inside or outside of the scroll casing (20), the lower portion of the upper scroll casing (21) having a scroll-side inclined surface (21g) extending along the partition plate-side inclined surface (24c), and abutting against the partition plate-side inclined surface (24c) and
a space is formed between the inner peripheral surface of the lower portion of the upper scroll casing (21) and a side surface of the inner fitting portion (24b) is facing the inner peripheral surface of the lower portion of the upper scroll casing (21).

2. The air-conditioning air blower (1) of claim 1, wherein
a lower surface of the partition plate (24) has at least one protrusion abutting against the upper portion of the lower scroll casing (22).

3. The air-conditioning air blower (1) of claim 2, wherein
the at least one protrusion comprises a plurality of protrusions spaced apart from one another in a circumferential direction of the lower scroll casing (22).

4. The air-conditioning air blower (1) of any one of claims 1 to 3, wherein the lower portion of the upper scroll casing (21) has a recess (21f) into which the inner fitting portion (24b) is fitted.

5. The air-conditioning air blower (1) of any one of claims 1 to 4, wherein
the upper portion of the lower scroll casing (22) has a fitting projection projecting upward, and
the lower portion of the upper scroll casing (21) has a fitting groove into which the lower fitting projection (22e) is inserted, and fitted.

6. The air-conditioning air blower (1) of any one of claims 1 to 5, wherein the upper portion of the lower scroll casing (22) has a step portion to which the peripheral portion of the partition plate (24) is fitted.

7. The air-conditioning air blower (1) of claim 1, wherein
the partition plate-side inclined surface (24c) is inclined downward toward the inside of the scroll casing (20).

## Patentansprüche

1. Klimatisierungsluftgebläse (1), konfiguriert, um in ein Fahrzeug montiert zu werden, umfassend:
ein Gehäuse (2), das einen Innenlufteinlass (2a, 2b) aufweist, durch den Luft innerhalb eines Fahrgastraums in das Gehäuse (2) eingebracht wird, und einen Außenlufteinlass (2c), durch den Luft außerhalb des Fahrgastraums in das Gehäuse (2) eingebracht wird, wobei das Gehäuse (2) weiter einen ersten Luftdurchlass (R1) und einen zweiten Luftdurchlass (R2) aufweist, die jeweils mit beiden von dem Innenlufteinlass (2a, 2b) und dem Außenlufteinlass (2c) verbunden sind, wobei das Gehäuse (2) eine Innenluft-/Außenluft-Schalt-Schlagsperre (6, 7) einhaust, die den Innenlufteinlass (2a, 2b) und den Außenlufteinlass (2c) öffnet und schließt;
einen ersten Gebläselüfter (3), der in dem ersten Luftdurchlass (R1) angeordnet ist; und
einen zweiten Gebläselüfter (4), der in dem zweiten Luftdurchlass (R2) angeordnet ist,
wobei der erste Gebläselüfter (3) Luft in dem ersten Luftdurchlass (R1) als Klimatisierungsluft zuführt, der zweite Gebläselüfter (4) Luft in dem zweiten Luftdurchlass (R2) als Klimatisierungsluft zuführt,
der Innenlufteinlass (2a, 2b) und der Außenlufteinlass (2c) durch einen oberen Abschnitt des Gehäuses (2) hindurch gebildet werden,
wobei ein Spiralgehäuse (20), das den ersten und zweiten Gebläselüfter (4) einhaust, unter dem Innenlufteinlass (2a, 2b) und dem Außenlufteinlass (2c) des Gehäuses (2) bereitgestellt ist,
wobei das Spiralgehäuse (20) in ein oberes Spiralgehäuse (21), in dem der erste Gebläselüfter (3) eingehaust ist, und ein unteres Spiralgehäuse (22), in dem der zweite Gebläselüfter (4) eingehaust ist, unterteilt ist, wobei ein unterer Abschnitt des oberen Spiralgehäuses (21) und ein oberer Abschnitt des unteren Spiralgehäuses (22) aneinander angebracht sind, wodurch das obere (21) und untere (22) Spiralgehäuse zusammen eingegliedert sind,
wobei das Spiralgehäuse (20) darin eine Unterteilungsplatte (24) beinhaltet, die ein Inneres des Spiralgehäuses (20) in obere und untere Freiräume unterteilt, wobei die Unterteilungsplatte (24) von dem Spiralgehäuse (20) getrennt ist, wobei der obere Freiraum oberhalb der Unterteilungsplatte (24) den ersten Luftdurchlass (R1) bildet, der untere Freiraum unterhalb der Unterteilungsplatte (24) den zweiten Luftdurchlass (R2) bildet,
wobei ein peripherer Abschnitt der Unterteilungsplatte (24) einen inneren Anbringungsabschnitt (24b) aufweist, der nach oben hervorsteht, wobei der innere Anbringungsabschnitt (24b) innerhalb eines Abschnitts des unteren Abschnitts des oberen Spiralgehäuses (21) angebracht ist, in dem das untere Spiralgehäuse (22) angebracht wird,
wobei das Klimatisierungsluftgebläse (1) **dadurch gekennzeichnet ist, dass** der innere Anbringungsabschnitt (24b) in einer Form einer Platte gebildet ist, die nach oben hervorsteht, und der innere Anbringungsabschnitt (24b) einer peripheren Innenoberfläche des unteren Abschnitts des oberen Spiralgehäuses (21) zugewandt ist, eine obere Endoberfläche des inneren Anbringungsabschnitts (24b) eine unterteilungsplattenseitige geneigte Oberfläche (24c) aufweist, die nach unten entweder zu einer Innenseite oder Außenseite des Spiralgehäuses (20) geneigt ist, wobei der untere Abschnitt des oberen Spiralgehäuses (21) eine spiralseitige geneigte Oberfläche (21g) aufweist, die sich entlang der unterteilungsplattenseitigen geneigten Oberfläche (24c) erstreckt, und an der unterteilungsplattenseitigen geneigten Oberfläche (24c) anliegt, und
ein Freiraum zwischen der peripheren Innenoberfläche des unteren Abschnitts des oberen Spiralgehäuses (21) gebildet wird, und eine Seitenoberfläche des inneren Anbringungsabschnitts (24b) der peripheren Innenoberfläche des unteren Abschnitts des oberen Spiralgehäuses (21) zugewandt ist.

2. Klimatisierungsluftgebläse (1) nach Anspruch 1, wobei
eine untere Oberfläche der Unterteilungsplatte (24) mindestens einen Vorsprung aufweist, der an dem oberen Abschnitt des unteren Spiralgehäuses (22) anliegt.

3. Klimatisierungsluftgebläse (1) nach Anspruch 2, wobei
der mindestens eine Vorsprung eine Vielzahl von Vorsprüngen umfasst, die in einer Umfangsrichtung des unteren Spiralgehäuses (22) voneinander beabstandet sind.

4. Klimatisierungsluftgebläse (1) nach einem der Ansprüche 1 bis 3, wobei der untere Abschnitt des oberen Spiralgehäuses (21) eine Aussparung (21f) aufweist, in der der innere Anbringungsabschnitt (24b) angebracht wird.

5. Klimatisierungsluftgebläse (1) nach einem der Ansprüche 1 bis 4, wobei
der obere Abschnitt des unteren Spiralgehäuses (22) einen Anbringungsvorsprung aufweist, der nach oben hervorspringt, und
der untere Abschnitt des oberen Spiralgehäuses (21) eine Anbringungsnut aufweist, in die der untere Anbringungsvorsprung (22e) eingeführt und dort angebracht ist.

6. Klimatisierungsluftgebläse (1) nach einem der Ansprüche 1 bis 5, wobei der obere Abschnitt des unteren Spiralgehäuses (22) einen Stufenabschnitt aufweist, an dem der periphere Abschnitt der Unterteilungsplatte (24) angebracht ist.

7. Klimatisierungsluftgebläse (1) nach Anspruch 1, wobei
die unterteilungsplattenseitige geneigte Oberfläche (24c) nach unten zur Innenseite des Spiralgehäuses (20) geneigt ist.

## Revendications

1. Soufflante de climatisation (1) configurée pour être montée dans un véhicule comprenant :
un boîtier (2) ayant une entrée d'air intérieur (2a, 2b) à travers laquelle l'air à l'intérieur d'un habitacle est introduit dans le boîtier (2), et une entrée d'air extérieur (2c) à travers laquelle l'air à l'extérieur de l'habitacle est introduit dans le boîtier (2), le boîtier (2) ayant en outre un premier passage d'air (R1) et un deuxième passage d'air (R2) communiquant chacun à la fois avec l'entrée d'air intérieur (2a, 2b) et l'entrée d'air extérieur (2c), le boîtier (2) logeant un registre de commutation d'air intérieur/extérieur (6, 7) qui ouvre et ferme l'entrée d'air intérieur (2a, 2b) et l'entrée d'air extérieur (2c) ;
un premier ventilateur de soufflante (3) disposé dans le premier passage d'air (R1) ; et
un deuxième ventilateur de soufflante (4) disposé dans le deuxième passage d'air (R2),
le premier ventilateur de soufflante (3) envoyant de l'air dans le premier passage d'air (R1) en tant qu'air de climatisation, le deuxième ventilateur de soufflante (4) envoyant de l'air dans le deuxième passage d'air (R2) en tant qu'air de climatisation,
l'entrée d'air intérieur (2a, 2b) et l'entrée d'air extérieur (2c) étant formées à travers une partie supérieure du boîtier (2),
un boîtier à volute (20) qui loge les premier et deuxième ventilateurs de soufflante (4) étant prévu sous l'entrée d'air intérieur (2a, 2b) et l'entrée d'air extérieur (2c) du boîtier (2),
le boîtier à volute (20) étant divisé en un boîtier à volute supérieur (21) dans lequel le premier ventilateur de soufflante (3) est logé et un boîtier à volute inférieur (22) dans lequel le deuxième ventilateur de soufflante (4) est logé, une partie inférieure du boîtier à volute supérieur (21) et une partie supérieure du boîtier à volute inférieur (22) étant ajustées l'une à l'autre, intégrant ainsi les boîtiers à volute supérieur (21) et inférieur (22) ensemble,
le boîtier à volute (20) comportant à l'intérieur une plaque de séparation (24) séparant un intérieur du boîtier à volute (20) en espaces supérieur et inférieur, la plaque de séparation (24) étant séparée du boîtier à volute (20), l'espace supérieur au-dessus de la plaque de séparation (24) formant le premier passage d'air (R1), l'espace inférieur en dessous de la plaque de séparation (24) formant le deuxième passage d'air (R2),
une partie périphérique de la plaque de séparation (24) ayant une partie d'ajustement intérieure (24b) qui fait saillie vers le haut, la partie d'ajustement intérieure (24b) étant ajustée à l'intérieur d'une partie de la partie inférieure du boîtier à volute supérieur (21) dans laquelle le boîtier à volute inférieur (22) est ajusté,
ladite soufflante de climatisation (1) étant **caractérisée en ce que** la partie d'ajustement intérieure (24b) est formée sous la forme d'une plaque faisant saillie vers le haut, et la partie d'ajustement intérieure (24b) fait face à une surface périphérique intérieure de la partie inférieure du boîtier à volute supérieur (21), une surface d'extrémité supérieure de la partie d'ajustement intérieure (24b) a une surface inclinée côté plaque de séparation (24c) qui est inclinée vers le bas vers l'intérieur ou l'extérieur du boîtier à volute (20), la partie inférieure du boîtier à volute supérieur (21) ayant une surface inclinée côté volute (21g) s'étendant le long de la surface inclinée côté plaque de séparation (24c) et venant en butée contre la surface inclinée côté plaque de séparation (24c), et
un espace est formé entre la surface périphérique intérieure de la partie inférieure du boîtier à volute supérieur (21) et une surface latérale de la partie d'ajustement intérieure (24b) fait face à la surface périphérique intérieure de la partie inférieure du boîtier à volute supérieur (21).

2. Soufflante de climatisation (1) de la revendication 1, dans laquelle une surface inférieure de la plaque de séparation (24) a au moins une saillie venant en butée contre la partie supérieure du boîtier à volute inférieur (22).

3. Soufflante de climatisation (1) de la revendication 2, dans laquelle l'au moins une saillie comprend une pluralité de saillies espacées les unes des autres dans une direction circonférentielle du boîtier à volute inférieur (22).

4. Soufflante de climatisation (1) de l'une quelconque des revendications 1 à 3, dans laquelle la partie inférieure du boîtier à volute supérieur (21) a un évidement (21f) dans lequel la partie d'ajustement intérieure (24b) est ajustée.

5. Soufflante de climatisation (1) de l'une quelconque des revendications 1 à 4, dans laquelle la partie supérieure du boîtier à volute inférieur (22) a une saillie d'ajustement faisant saillie vers le haut, et
la partie inférieure du boîtier à volute supérieur (21) a une rainure d'ajustement dans laquelle la saillie d'ajustement inférieure (22e) est insérée et ajustée.

6. Soufflante de climatisation (1) de l'une quelconque des revendications 1 à 5, dans laquelle la partie supérieure du boîtier à volute inférieur (22) a une partie étagée sur laquelle la partie périphérique de la plaque de séparation (24) est ajustée.

7. Soufflante de climatisation (1) de la revendication 1, dans laquelle la surface inclinée côté plaque de séparation (24c) est inclinée vers le bas vers l'intérieur du boîtier à volute (20).
